(19) Europäisches Patentamt
European Patent Office
Office européen des brevets

(11) **EP 4 589 902 A1**

(12) **EUROPEAN PATENT APPLICATION**

(43) Date of publication:
**23.07.2025  Bulletin 2025/30**

(21) Application number: **25152049.0**

(22) Date of filing: **15.01.2025**

(51) International Patent Classification (IPC):
**H04L 27/26** *(2006.01)*

(52) Cooperative Patent Classification (CPC):
**H04L 27/2618**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.01.2024  FI 20245039**

(71) Applicant: **Nokia Solutions and Networks Oy
02610 Espoo (FI)**

(72) Inventors:
• **GOKCELI, Selahattin
  00150 Helsinki (FI)**
• **BEDIN, Andrea
  02630 Espoo (FI)**
• **JAIN, Akshay
  00520 Helsinki (FI)**
• **UPADHYA, Karthik
  02200 Espoo (FI)**

(74) Representative: **DREISS Patentanwälte PartG mbB
Friedrichstraße 6
70174 Stuttgart (DE)**

(54) **PEAK TO AVERAGE POWER RATIO REDUCTION**

(57)    The present disclosure relates to an apparatus comprising at least one processor and at least one memory including computer program code. The at least one memory and the computer program code are configured to, with the at least one processor, cause the apparatus at least to perform: Obtaining a frequency domain signal comprising a plurality of tones. Generating, based on the frequency domain signal, a time domain signal comprising a plurality of samples. Determining whether at least one sample within the plurality of samples meets an amplitude threshold; and performing, in response to the at least one sample meeting the amplitude threshold, a tone puncturing procedure.

```
Determine set of peak indices  — 301
        |
Determine puncture number  — 302
        |
Select set of tones  — 303
        |
Tune set of tones  — 304
        |
Transform to obtain peak-reduced sample  — 305
        |
Replace sample with peak-reduced sample  — 306
```

FIG. 3

EP 4 589 902 A1

## Description

## TECHNICAL FIELD

Various example embodiments described herein relate to the field of wireless communications.

## BACKGROUND

Wireless communications are under constant development. Energy efficiency and spectral efficiency are important for next-generation wireless networks. High carrier frequencies have potential for efficiency while they may also introduce new problems such as, e.g., higher path loss and hardware problems due to radio frequency components such as power amplifiers (PAs). Therefore, techniques for increasing power amplifier efficiency are important for meeting the requirements of 5G and beyond.

## SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure enable a peak to average power ratio (PAPR) reduction or minimization for an orthogonal frequency division multiplexing (OFDM) waveform with a low computational complexity. This benefit may be achieved by the features of the independent claims. Further example embodiments are provided in the dependent claims, the detailed description, and the drawings.

According to a first aspect, an apparatus is disclosed. The apparatus may comprise: At least one processor and at least one memory including computer program code. The at least one memory and the computer program code may be configured to, with the at least one processor, cause the apparatus at least to perform: Obtaining a frequency domain signal comprising a plurality of tones. Generating, based on the frequency domain signal, a time domain signal comprising a plurality of samples. Determining whether at least one sample within the plurality of samples meets an amplitude threshold. Performing, in response to the at least one sample meeting the amplitude threshold, a tone puncturing procedure by: Determining a set of peak indices corresponding to the at least one sample meeting the amplitude threshold, peak index per sample. Determining a puncture number based on an error correction capability of a decoder. Selecting a set of tones within the plurality of tones for tone puncturing, wherein a number of tones within the set of tones equals to the puncture number. Tuning, per tone within the set of tones, the tone. Transforming, per peak index within the set of peak indices, the tuned set of tones into time domain to obtain a peak-reduced sample corresponding to the peak index. Replacing, per peak index within the set of peak indices, a sample corresponding to the peak index with the peak-reduced sample corresponding to the peak index.

With such an apparatus, number of tones dedicated to peak to average power ratio (PAPR) reduction may be decreased. Selecting tones having a low signal-to-noise ratio may minimize an impact of a loss of the selected tones. Computational complexity may be reduced with the efficient tone puncturing procedure. Channel coding may be effectively exploited for data recovery purposes.

According to an example embodiment of the first aspect, the at least one memory and the computer program code may be configured to, with the at least one processor, cause the apparatus further to perform after performing the tone puncturing procedure: Determining whether at least one sample within the plurality of samples meets the amplitude threshold. Repeating, in response to the at least one sample meeting the amplitude threshold, performing the tone puncturing procedure. With such an apparatus, a desired PAPR reduction level may be achieved.

According to an example embodiment of the first aspect, the at least one memory and the computer program code may be configured to, with the at least one processor, cause the apparatus further to perform: Increasing, when repeating performing the tone puncturing procedure, the puncture number. With such an apparatus, PAPR reduction may be started with a small number of tones and continued with a greater number if the desired PAPR performance is not obtained.

According to an example embodiment of the first aspect, the at least one memory and the computer program code may be configured to, with the at least one processor, cause the apparatus further to perform transforming, per peak index within the plurality of peak indices, the tuned set of tones into time domain by: Multiplying, per tone within the tuned set of tones, the tone by a Fourier coefficient corresponding to the tone and to the peak index. Adding the multiplied set of tones together. Dividing the result by a total number of samples within the plurality of samples. With such an apparatus, efficient computation without a need for repeated Fast Fourier Transforms (FFTs) or Inverse Fast Fourier Transforms (IFFTs) may be achieved for PAPR reduction.

According to an example embodiment of the first aspect, the at least one memory and the computer program code may be configured to, with the at least one processor, cause the apparatus further to perform tuning, per tone within the set of tones, the tone by: Determining a phase shifted tone based on the tone. Adding the phase shifted tone to the tone.

According to a second aspect, a computer-implemented method is disclosed. The method may comprise: Obtaining a frequency domain signal comprising a plurality of tones. Generating, based on the frequency domain signal, a time domain signal comprising a plurality of samples. Determining whether at least one sample within the plurality of samples meets an amplitude threshold. Performing, in response to the at least one sample meeting the amplitude threshold, a tone puncturing procedure by: Determining a set of peak indices corresponding to the at least one sample meeting the amplitude threshold, peak index per sample. Determining a puncture number based on an error correction capability of a decoder. Selecting a set of tones within the plurality of tones for tone puncturing, wherein a number of tones within the set of tones equals to the puncture number. Tuning, per tone within the set of tones, the tone. Transforming, per peak index within the set of peak indices, the tuned set of tones into time domain to obtain a peak-reduced sample corresponding to the peak index. Replacing, per peak index within the set of peak indices, a sample corresponding to the peak index with the peak-reduced sample corresponding to the peak index.

With such a method, number of tones dedicated to peak to average power ratio (PAPR) reduction may be decreased. Selecting tones having a low signal-to-noise ratio may minimize an impact of a loss of the selected tones. Computational complexity may be reduced with the efficient tone puncturing procedure. Channel coding may be effectively exploited for data recovery purposes.

According to an example embodiment of the second aspect, the method may further comprise after performing the tone puncturing procedure: Determining whether at least one sample within the plurality of samples meets the amplitude threshold. Repeating, in response to the at least one sample meeting the amplitude threshold, performing the tone puncturing procedure. With such a method, a desired PAPR reduction level may be achieved.

According to an example embodiment of the second aspect, the method may further comprise: Increasing, when repeating performing the tone puncturing procedure, the puncture number. With such a method, PAPR reduction may be started with a small number of tones and continued with a greater number if the desired PAPR performance is not obtained.

According to an example embodiment of the second aspect, transforming, per peak index within the plurality of peak indices, the tuned set of tones into time domain may comprise: Multiplying, per tone within the tuned set of tones, the tone by a Fourier coefficient corresponding to the tone and to the peak index. Adding the multiplied set of tones together. Dividing the result by a total number of samples within the plurality of samples. With such a method, efficient computation without a need for repeated Fast Fourier Transforms (FFTs) or Inverse Fast Fourier Transforms (IFFTs) may be achieved for PAPR reduction.

According to an example embodiment of the second aspect, tuning, per tone within the set of tones, the tone may comprise: Determining a phase shifted tone based on the tone. Adding the phase shifted tone to the tone.

According to a third aspect, a computer-readable medium is disclosed. The computer-readable medium may comprise program instructions for causing an apparatus to perform at least the following: Obtaining a frequency domain signal comprising a plurality of tones. Generating, based on the frequency domain signal, a time domain signal comprising a plurality of samples. Determining whether at least one sample within the plurality of samples meets an amplitude threshold. Performing, in response to the at least one sample meeting the amplitude threshold, a tone puncturing procedure by: Determining a set of peak indices corresponding to the at least one sample meeting the amplitude threshold, peak index per sample. Determining a puncture number based on an error correction capability of a decoder. Selecting a set of tones within the plurality of tones for tone puncturing, wherein a number of tones within the set of tones equals to the puncture number. Tuning, per tone within the set of tones, the tone. Transforming, per peak index within the set of peak indices, the tuned set of tones into time domain to obtain a peak-reduced sample corresponding to the peak index. Replacing, per peak index within the set of peak indices, a sample corresponding to the peak index with the peak-reduced sample corresponding to the peak index.

According to an example embodiment of the third aspect, the computer-readable medium may further comprise program instructions for causing the apparatus to further perform the following after performing the tone puncturing procedure: Determining whether at least one sample within the plurality of samples meets the amplitude threshold. Repeating, in response to the at least one sample meeting the amplitude threshold, performing the tone puncturing procedure.

According to a fourth aspect, a computer program is disclosed. The computer program may comprise instructions for causing an apparatus to perform at least the following: Obtaining a frequency domain signal comprising a plurality of tones. Generating, based on the frequency domain signal, a time domain signal comprising a plurality of samples. Determining whether at least one sample within the plurality of samples meets an amplitude threshold. Performing, in response to the at least one sample meeting the amplitude threshold, a tone puncturing procedure by: Determining a set of peak indices corresponding to the at least one sample meeting the amplitude threshold, peak index per sample. Determining a puncture number based on an error correction capability of a decoder. Selecting a set of tones within the plurality of tones for tone puncturing, wherein a number of tones within the set of tones equals to the puncture number. Tuning, per tone within the set of tones, the tone. Transforming, per peak index within the set of peak indices, the tuned set of tones into time domain to obtain a peak-reduced sample corresponding to the peak index. Replacing, per peak index within the set of peak indices, a sample corresponding to the peak index with the peak-reduced sample corresponding to the peak index.

According to an example embodiment of the fourth aspect, the computer program may further comprise instructions for causing the apparatus to further perform the following after performing the tone puncturing procedure: Determining whether at least one sample within the plurality of samples meets the amplitude threshold. Repeating, in response to the at least one sample meeting the amplitude threshold, performing the tone puncturing procedure.

Any example embodiment may be combined with one or more other example embodiments. Many of the attendant features will be more readily appreciated as they become better understood by reference to the following detailed description considered in connection with the accompanying drawings.

## DESCRIPTION OF THE DRAWINGS

The accompanying drawings, which are included to provide a further understanding of the example embodiments and constitute a part of this specification, illustrate example embodiments and together with the description help to understand the example embodiments. In the drawings:

> FIG. 1 illustrates an exemplified wireless communication system;
> FIG. 2 illustrates example functionalities of an apparatus according to an example embodiment;
> FIG. 3 illustrates example functionalities of an apparatus according to an example embodiment;
> FIG. 4 illustrates example functionalities of an apparatus according to an example embodiment;
> FIG. 5 illustrates experimental results obtained for an apparatus according to an example embodiment;
> FIG. 6 illustrates experimental results obtained for an apparatus according to an example embodiment;
> FIG. 7 illustrates experimental results obtained for an apparatus according to an example embodiment; and
> FIG. 8 illustrates a schematic block diagram of an apparatus according to an example embodiment.

## DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Although the specification may refer to "an", "one", or "some" embodiment(s) in several locations, this does not necessarily mean that each such reference is to the same embodiment(s), or that the feature may not apply to other embodiments. Single features of different embodiments may also be combined to provide other embodiments. Furthermore, words "comprising" and "including" should be understood as not limiting the described embodiments/examples to consist of only those features that have been mentioned and such embodiments/examples may contain also features/structures that have not been specifically mentioned.

Furthermore, although the numerative terminology, such as "first", "second", etc., may be used herein to describe various embodiments, elements, or features, it should be understood that these embodiments, elements, or features should not be limited by this numerative terminology. This numerative terminology is used herein only to distinguish one embodiment, element, or feature from another embodiment, element, or feature. For example, a first panel discussed below could be called a second panel, and vice versa, without departing from the teachings of the present disclosure.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WiAN or WiFi), worldwide interoperability for microwave access (Wi-MAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

According to an example embodiment, an apparatus comprises means to perform a tone puncturing procedure. An obtained frequency domain signal is transformed into a time domain signal comprising a plurality of samples. If least one peak sample is detected within the plurality of samples. The tone puncturing procedure comprises determining how many tones (subcarriers) are selected for the procedure based on an error correction capability of a decoder. The set of tones selected for tone puncturing are tuned to obtain peak-reduced samples in the time domain.

According to the example embodiment, tones used in tone puncturing are selected among the toned used for data transmission, unlike in techniques wherein a subset of tones is reserved for generating a peak-cancellation signal. This may allow using less tones for peak to average power ratio (PAPR) reduction than if a constant or a pre-determined number of tones were reserved for the reduction.

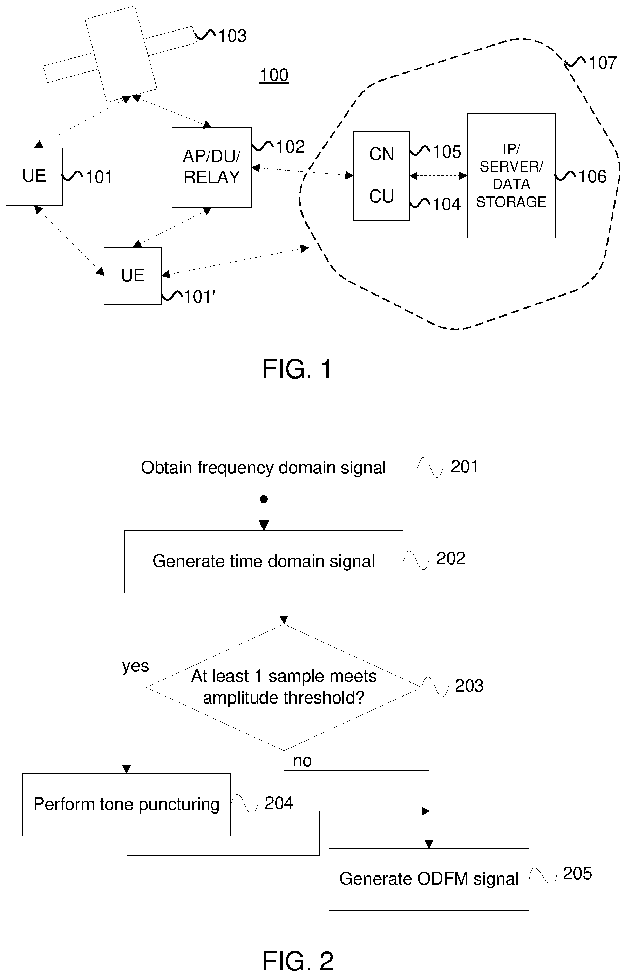

FIG. 1 depicts examples of simplified system architectures only showing some elements and functional entities, all being logical units, whose implementation may differ from what is shown. The connections shown in FIG. 1 are logical connections; the actual physical connections may be different. It is apparent to a person skilled in the art that the system typically comprises also other functions and structures than those shown in FIG. 1.

The embodiments are not, however, restricted to the system given as an example but a person skilled in the art may apply the solution to other communication systems provided with necessary properties.

The example of FIG. 1 shows a part of an exemplifying radio access network 100.

FIG. 1 shows user devices 101, 101' configured to be in a wireless connection on one or more communication channels with a node 102. The node 102 is further connected to a core network 105. In one example, the node 102 may be an access node such as (e/g) NodeB providing or serving devices in a cell. In one example, the node 102 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 105 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), or access and mobility management function (AMF), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g., to be used in smart power grids and connected vehicles. The user device may also utilize cloud. In some applications, a user device may comprise a user portable device with radio parts (such as a watch, earphones, eyeglasses, other wearable accessories or wearables) and the computation is carried out in the cloud. The device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using multiple-input multiple-output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6 GHz-cmWave, below 6 GHz-cmWave-mmWave). One of the concepts considered to be used in 5G networks is network slicing in which multiple independent and dedicated virtual sub-networks (network instances) may be created within the same infrastructure to run services that have different requirements on latency, reliability, throughput, and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets, and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 106 , or utilize services provided by them. The communication network may also be able to support the usage of cloud services, for example at least part of core network operations may be carried out as a cloud service (this is depicted in FIG. 1 by "cloud" 107). The communication system may also comprise a central control entity, or a like, providing facilities for networks of different operators to cooperate for example in spectrum sharing.

The technology of Edge cloud may be brought into a radio access network (RAN) by utilizing network function virtualization (NVF) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes, or hosts. Application of cloud RAN architecture enables RAN real time functions being carried out at the RAN side (in a distributed unit, DU 102) and non-real time functions being carried out in a centralized manner (in a centralized unit, CU 104).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 103 in the mega-constellation may cover several satellite-enabled network entities that create on-ground cells. The on-ground cells may be created through an on-ground relay node 102 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)NodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)NodeBs, includes, in addition to Home (e/g)NodeBs (H(e/g)NodeBs), a home node B gateway, or HNB-GW (not shown in FIG. 1). A HNB Gateway (HNB-GW), which is typically installed within an operator's network may aggregate traffic from a large number of HNBs back to a core network.

In 5G and beyond, it is envisaged that peak to average power ratio (PAPR) reduction or minimization techniques for an orthogonal frequency division multiplexing (OFDM) waveform are needed. An apparatus configured to perform a tone puncturing procedure may be configured to enable an efficient and effective PAPR reduction solution, e.g., as described below with FIG. 2 to 4.

FIG. 2 illustrates an example functionality of an apparatus configured to perform tone-puncturing procedure according to an example embodiment.

Referring to FIG. 2, a frequency domain signal is obtained in operation 201. The frequency domain comprises a plurality of tones (subcarriers). A time domain signal is generated in operation 202 based on the obtained frequency domain signal. The time domain signal comprises a plurality of samples. It is determined in operation 203 whether at least one sample within the plurality of samples meets an amplitude threshold. In an example embodiment, the amplitude threshold may be pre-determined. In an example embodiment, the amplitude threshold may be determined based on a PAPR target level. This may be expressed, e.g., with equation:

$$A = \sqrt{\lambda_{target} E(|x|^2)} \, ,$$

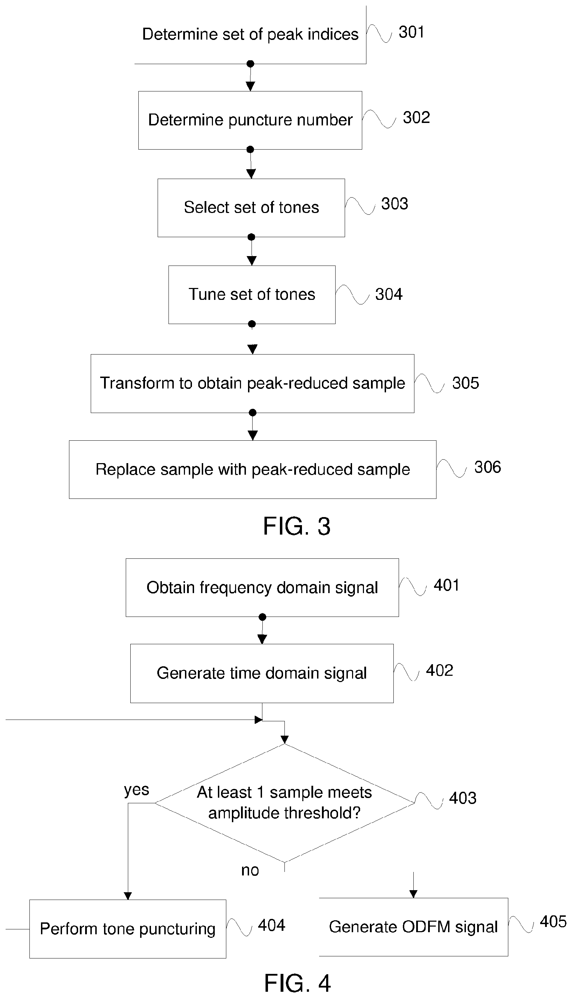

wherein $A$ may be understood as the amplitude threshold, $\lambda_{target}$ as the PAPR target level, $x$ as the generated time domain signal, and $E(\cdot)$ as an expectation operator. If at least one sample within the plurality of samples meets the amplitude threshold (operation 203: yes), tone puncturing procedure is performed in operation 204. The tone puncturing procedure is explained in more detail below with reference to FIG. 3. Then, an orthogonal frequency division multiplexing (OFDM) signal is generated in operation 205. In an example embodiment, the OFDM signal is generated by a cyclic prefix addition and a parallel-to-serial conversion. If no sample within the plurality of samples meets the amplitude threshold (operation 203: no), the OFDM signal is generated in operation 205.

FIG. 3 illustrates an example functionality of an apparatus configured to perform tone-puncturing procedure according to an example embodiment. The functionalities within FIG. 3 are assumed to occur within operation 204 in FIG. 2 or operation 404 in FIG. 4.

Referring to FIG. 3, a set of peak indices corresponding to the at least one sample meeting the amplitude threshold is determined in operation 301. A puncture number is determined in operation 302 based on an error correction capability of a decoder configured to receive the frequency domain signal. A set of tones within the plurality of tones is selected in operation 303 for tone puncturing. The number of tones within the set of tones equals to the puncture number. In an example embodiment, the set of tones is selected based on channel state information. The set of tones is tuned in operation 304, per tone within the set of tones. In an example embodiment, the tone is tuned by determining a shifted tone based on the tone, wherein the tone is shifted with respect to time and phase, and adding the shifted tone to the tone. This shifted tone may be expressed with equations:

$$Z[k] = \sum_{i \in \kappa_{peak}} A_i e^{-\Sigma_k \theta_{\kappa_{peak[i]}}[k]} \, ,$$

$$A_i = \frac{|x[\kappa_{peak}[i]\,]| - A}{\mathrm{card}(\kappa_{peak})} \, ,$$

wherein $k \in \kappa_p$ may be understood as an index of the tone within the set of tones, $Z[k]$ as the shifted tone, $i$ as a peak index, $\kappa_{peak}$ as the set of peak indices, $A_i$ as an amplitude value for sample $i$, $\Sigma_k \theta_{\kappa peak[i]}[k]$ as a phase value of sample $i$, $x[\kappa_{peak}[i]]$ as a sample of index $\kappa_{peak}[i]$, $A$ as the amplitude threshold, and $\mathrm{card}(\kappa_{peak})$ as a cardinality of the set of peak indices. The tuned set of tones is transformed in operation 305 into time domain, per peak index within the set of peak indices, to obtain a peak-reduced sample corresponding to the peak index. In an example embodiment, the transforming may be performed by multiplying, per tone within the tuned set of tones, the tone by a Fourier coefficient corresponding to the tone and to the peak index, then adding the multiplied set of tones together, and dividing the result by a total number of samples within the plurality of samples. This may be expressed with equation:

$$\bar{x}[n] = \frac{1}{\sqrt{N}} \sum_{k \in \kappa_p} (X[k] + Z[k]) e^{\frac{j2\pi kn}{N}} \, ,$$

wherein $\overline{x}[n]$ may be understood as the peak-reduced sample at peak index $n \in \kappa_{peak}$, $N$ as the total number of samples within the plurality of samples, X[k] as the tone, Z [k] as the shifted tone, and $e^{\frac{j2\pi kn}{N}}$ as the Fourier coefficient corresponding to the tone and to the peak index. The sample is replaced in operation 306 with the peak-reduced sample.

FIG. 4 illustrates an example functionality of an apparatus configured to perform tone-puncturing procedure according to an example embodiment.

Referring to FIG. 4, a frequency domain signal is obtained in operation 401. The frequency domain comprises a plurality of tones (subcarriers). A time domain signal is generated in operation 402 based on the obtained frequency domain signal. The time domain signal comprises a plurality of samples. It is determined in operation 403 whether at least one sample within the plurality of samples meets an amplitude threshold. In an example embodiment, the amplitude threshold may be pre-determined. In an example embodiment, the amplitude threshold may be determined based on a PAPR target level as explained above with FIG. 2. If at least one sample within the plurality of samples meets the amplitude threshold (operation 403: yes), tone puncturing procedure is performed in operation 404. The tone puncturing procedure is explained in more detail above with reference to FIG. 3. If no sample within the plurality of samples meets the amplitude threshold (operation 403: no), an orthogonal frequency division multiplexing (OFDM) signal is generated in operation 405. In an example embodiment, the OFDM signal is generated by a cyclic prefix addition and a parallel-to-serial conversion. After performing the tone puncturing procedure, it is determined in operation 403 whether at least one sample within the plurality of samples meets the amplitude threshold. If at least one sample within the plurality of samples meets the amplitude threshold (operation 403: yes), the tone puncturing procedure is performed in operation 404. Thus, the process continues repeating, in response to the at least one sample meeting the amplitude threshold, performing the tone puncturing procedure. In an example embodiment, the puncture number may be increased when repeating performing the tone puncturing procedure. In an example embodiment, repeating performing the tone puncturing procedure may be stopped after a pre-determined number of times and the process continued in operation 405. In an example embodiment, repeating performing the tone puncturing procedure may be stopped when the number of samples meeting the amplitude threshold is below a pre-determined sample number threshold and the process continued in operation 405.

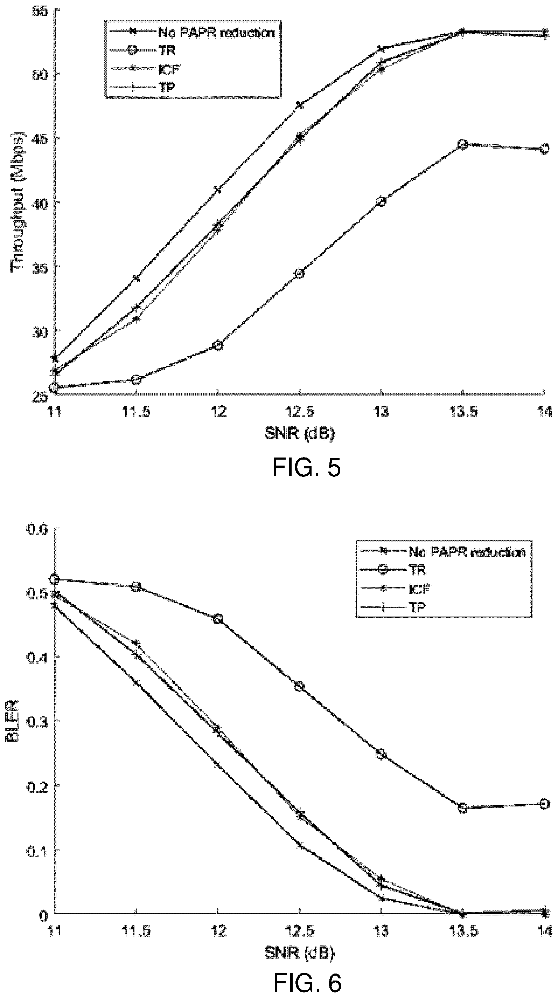

FIG. 5, FIG. 6, and FIG. 7 illustrate numerical performance evaluation comparisons of a tone puncturing procedure according to an example embodiment with two conventional methods, namely iterative clipping and filtering (ICF) and tone reduction (TR), and no PAPR reduction. The evaluations are conducted considering 20 MHz SGNR bandwidth configuration with subcarrier (tone) spacing of 30 kHz and oversampling factor of 4. Clipping level of 7.5 dB is targeted with the algorithms. As the modulation, 64-QAM is considered with code rate of 567/1024. The evaluations are conducted by using a comprehensive PDSCH simulator, with HARQ enabled (configured to have 16 iterations), and throughput, block error rate (BLER) and PAPR are considered as the main performance metrics. Furthermore, for TP and TR, the maximum number of tones that can be used for PAPR reduction is limited to 25. Also, three different signal-to-noise ratio (SNR) points are considered in the first evaluation.

Note that in the examples of FIG. 5, 6, and 7 the no PAPR reduction provides the highest throughput and lowest BLER because a realistic PA model is not considered in the evaluations. This enables evaluating how much degradation the PAPR reduction causes in terms of throughput and BLER with respect to original case, but this difference is not realistic. High PAPR significantly deteriorates PA efficiency, which naturally degrades both the transmission power and error performance.

In ICF, time-domain clipping and frequency-domain out-of-band (OOB) emission filtering are iteratively applied to reduce PAPR of the digital waveform and control the OOB emissions. There is a need for consecutive FFT and IFFT operations which leads to high computational complexity with respect to original OFDM waveform processing.

In TR, a number of tones are continuously dedicated for PAPR reduction, leading to a reduced data rate.

Referring to FIG. 5, TP slightly outperforms ICF in terms of throughput. The difference between TP and TR is more than 5 Mbps in favor of TP, which is a significant amount. At high SNR TP causes only a marginal error and comes close to the throughput of the no PAPR reduction.

Referring to FIG. 6, TP slightly outperforms ICF also in terms of BLER, while TR again performs poorly.

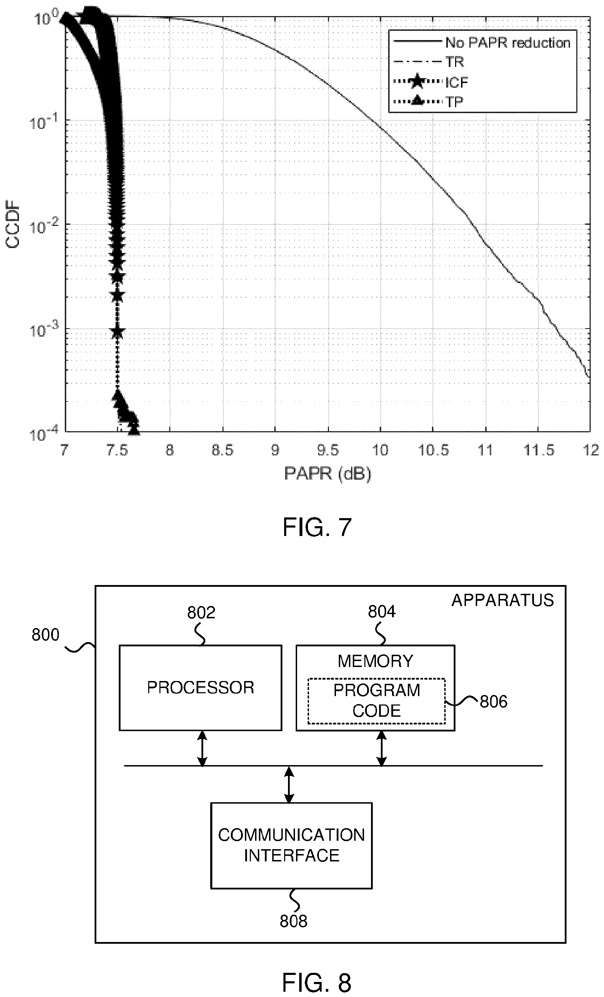

Referring to FIG. 7, complementary cumulative distribution functions (CCDF) of PAPR performance results are compared. TP provides almost similar PAPR performance to ICF, despite a marginal difference at low probability levels. TP even provides a PAPR advantage at high probability levels.

FIG. 8 illustrates an example embodiment of an apparatus 800 configured to practice one or more example embodiments. The apparatus 800 may comprise, e.g., a base station, a gNB, a terminal apparatus, a user node, a user equipment, a cloud node, or in general a device configured to implement the functionality described herein. Although the apparatus 800 is illustrated as a single device, it is appreciated that, wherever applicable, functions of the apparatus 800 may be distributed to a plurality of devices.

The apparatus 800 may comprise at least one processor 802. The at least one processor 802 may comprise, for example, one or more of various processing devices or processor circuitry, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus 800 may further comprise at least one memory 804. The at least one memory 804 may be configured to store, for example, computer program code or the like, for example operating system software and application software. The at least one memory 804 may comprise one or more volatile memory devices, one or more non-volatile memory devices, and/or a combination thereof. For example, the at least one memory 804 may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

The apparatus 800 may further comprise a communication interface 808 configured to enable the apparatus 800 to transmit and/or receive information to/from other devices. In one example, the apparatus 800 may use the communication interface 808 to transmit or receive signaling information and data in accordance with at least one data communication or cellular communication protocol. The communication interface 808 may be configured to provide at least one wireless radio connection, such as, for example, a 3GPP mobile broadband connection (e.g., 3G, 4G, 5G, 6G etc.). The communication interface 808 may comprise, or be configured to be coupled to, at least one antenna to transmit and/or receive radio frequency signals. One or more of the various types of connections may be also implemented as separate communication interfaces, which may be coupled or configured to be coupled to one or more of a plurality of antennas. The communication interface 808 may comprise a receiver, a transmitter, or a transceiver.

When the apparatus 800 is configured to implement some functionality, some component and/or components of the apparatus 800, such as for example the at least one processor 802 and/or the at least one memory 804, may be configured to implement this functionality. Furthermore, when the at least one processor 802 is configured to implement some functionality, this functionality may be implemented using program code 806 comprised, for example, in the at least one memory 804.

The functionality described herein may be performed, at least in part, by one or more computer program product components such as for example software components. According to an example embodiment, the apparatus 800 may comprise a processor or processor circuitry, such as for example a microcontroller, configured by the program code when executed to execute the embodiments of the operations and functionality described. The program code 806 is provided as an example of instructions which, when executed by the at least one processor 802, cause performance of apparatus. Alternatively, or additionally, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus 800 may be configured to perform or cause performance of any aspect of the method(s) described herein. Further, a computer program may comprise instructions for causing, when executed, an apparatus to perform any aspect of the method(s) described herein. The computer program may be stored on a computer-readable medium. Further, the apparatus 800 may comprise means for performing any aspect of the method(s) described herein. In one example, the means may comprise the at least one processor 802, the at least one memory 804 including the program code 806 (instructions) configured to, when executed by the at least one processor 802, cause the apparatus 800 to perform the method(s). In general, computer program instructions may be executed on means providing generic processing functions. The method(s) may be thus computer-implemented, for example, algorithm(s) executable by the generic processing functions, an example of which is the at least one processor 802. The means may comprise transmission and/or reception means, for example one or more radio transmitters or receivers, which may be coupled or be configured to be coupled to one or more antennas, or transmitter(s) or receiver(s) of a wired communication interface.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and ($\tau$) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile device or a similar integrated circuit in a sensor, a cellular network device, or another network device.

Although the subject matter has been described in language specific to structural features and/or acts, it is to be understood that the subject matter defined in the appended claims is not necessarily limited to the specific features or acts described above. Rather, the specific features and acts described above are disclosed as example embodiments of implementing the claims and other equivalent features and acts are intended to be within the scope of the claims.

It will be understood that the benefits and advantages described above may relate to one example embodiment or may relate to several example embodiments. The example embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

It will be understood that the above description is given by way of example embodiments only and that various modifications may be made by those skilled in the art. The above specification, example embodiments and data provide a complete description of the structure and use of exemplary embodiments. Although various example embodiments have been described above with a certain degree of particularity, or with reference to one or more individual embodiments, those skilled in the art could make numerous alterations to the disclosed example embodiments without departing from scope of this specification.

**Claims**

1. An apparatus (800) comprising:

    at least one processor (802); and
    at least one memory (804) including computer program code (806);
    the at least one memory (804) and the computer program code (806) configured to, with the at least one processor (802), cause the apparatus (800) at least to perform:

        obtaining (201) a frequency domain signal comprising a plurality of tones;
        generating (202), based on the frequency domain signal, a time domain signal comprising a plurality of samples;
        determining (203) whether at least one sample within the plurality of samples meets an amplitude threshold; and
        performing (204), in response to the at least one sample meeting the amplitude threshold, a tone puncturing procedure by:

            determining a set of peak indices corresponding to the at least one sample meeting the amplitude threshold, peak index per sample;
            determining a puncture number based on an error correction capability of a decoder;
            selecting a set of tones within the plurality of tones for tone puncturing, wherein a number of tones within the set of tones equals to the puncture number;
            tuning, per tone within the set of tones, the tone;
            transforming, per peak index within the set of peak indices, the tuned set of tones into time domain to obtain a peak-reduced sample corresponding to the peak index; and
            replacing, per peak index within the set of peak indices, a sample corresponding to the peak index with the peak-reduced sample corresponding to the peak index.

2. An apparatus (800) according to claim 1, the at least one memory and the computer program code being configured to, with the at least one processor, cause the apparatus further to perform after performing the tone puncturing procedure:

        determining whether at least one sample within the plurality of samples meets the amplitude threshold; and
        repeating, in response to the at least one sample meeting the amplitude threshold, performing the tone puncturing procedure.

3. An apparatus (800) according to claim 2, the at least one memory and the computer program code being configured to, with the at least one processor, cause the apparatus further to perform:
   increasing, when repeating performing the tone puncturing procedure, the puncture number.

4. An apparatus (800) according to any of the preceding claims, the at least one memory and the computer program code being configured to, with the at least one processor, cause the apparatus further to perform transforming, per peak index within the plurality of peak indices, the tuned set of tones into time domain by:

multiplying, per tone within the tuned set of tones, the tone by a Fourier coefficient corresponding to the tone and to the peak index; adding the multiplied set of tones together; and dividing the result by a total number of samples within the plurality of samples.

5. An apparatus (800) according to any of the preceding claims, the at least one memory and the computer program code being configured to, with the at least one processor, cause the apparatus further to perform tuning, per tone within the set of tones, the tone by:

determining a phase shifted tone based on the tone; and adding the phase shifted tone to the tone.

6. A computer-implemented method comprising:

obtaining (201) a frequency domain signal comprising a plurality of tones; generating (202), based on the frequency domain signal, a time domain signal comprising a plurality of samples; determining (203) whether at least one sample within the plurality of samples meets an amplitude threshold; and performing (204), in response to the at least one sample meeting the amplitude threshold, a tone puncturing procedure by:

determining a set of peak indices corresponding to the at least one sample meeting the amplitude threshold, peak index per sample; determining a puncture number based on an error correction capability of a decoder; selecting a set of tones within the plurality of tones for tone puncturing, wherein a number of tones within the set of tones equals to the puncture number; tuning, per tone within the set of tones, the tone; transforming, per peak index within the set of peak indices, the tuned set of tones into time domain to obtain a peak-reduced sample corresponding to the peak index; and replacing, per peak index within the set of peak indices, a sample corresponding to the peak index with the peak-reduced sample corresponding to the peak index.

7. A computer-implemented method according to claim 6, further comprising after performing the tone puncturing procedure:

determining whether at least one sample within the plurality of samples meets the amplitude threshold; and repeating, in response to the at least one sample meeting the amplitude threshold, performing the tone puncturing procedure.

8. A computer-implemented method according to claim 7, further comprising:
increasing, when repeating performing the tone puncturing procedure, the puncture number.

9. A computer-implemented method according to any of claims 6 to 8, wherein transforming, per peak index within the plurality of peak indices, the tuned set of tones into time domain comprises:

multiplying, per tone within the tuned set of tones, the tone by a Fourier coefficient corresponding to the tone and to the peak index; adding the multiplied set of tones together; and dividing the result by a total number of samples within the plurality of samples.

10. A computer-implemented method according to any of claims 6 to 9, wherein tuning, per tone within the set of tones, the tone comprises:

determining a phase shifted tone based on the tone; and adding the phase shifted tone to the tone.

11. A computer-readable medium comprising program instructions for causing an apparatus to perform at least the following:

obtaining (201) a frequency domain signal comprising a plurality of tones; generating (202), based on the frequency domain signal, a time domain signal comprising a plurality of samples; determining (203) whether at least one sample within the plurality of samples meets an amplitude threshold; and performing (204), in response to the at least one sample meeting the amplitude threshold, a tone puncturing procedure by:

determining a set of peak indices corresponding to the at least one sample meeting the amplitude threshold, peak index per sample; determining a puncture number based on an error correction capability of a decoder;

selecting a set of tones within the plurality of tones for tone puncturing, wherein a number of tones within the set of tones equals to the puncture number;

tuning, per tone within the set of tones, the tone;

transforming, per peak index within the set of peak indices, the tuned set of tones into time domain to obtain a peak-reduced sample corresponding to the peak index; and

replacing, per peak index within the set of peak indices, a sample corresponding to the peak index with the peak-reduced sample corresponding to the peak index.

12. A computer-readable medium according to claim 11, further comprising program instructions for causing the apparatus to further perform the following after performing the tone puncturing procedure:

determining whether at least one sample within the plurality of samples meets the amplitude threshold; and

repeating, in response to the at least one sample meeting the amplitude threshold, performing the tone puncturing procedure.

13. A computer program comprising instructions for causing an apparatus to perform at least the following:

obtaining a frequency domain signal comprising a plurality of tones;

generating, based on the frequency domain signal, a time domain signal comprising a plurality of samples;

determining whether at least one sample within the plurality of samples meets an amplitude threshold; and

performing, in response to the at least one sample meeting the amplitude threshold, a tone puncturing procedure by:

determining a set of peak indices corresponding to the at least one sample meeting the amplitude threshold, peak index per sample;

determining a puncture number based on an error correction capability of a decoder;

selecting a set of tones within the plurality of tones for tone puncturing, wherein a number of tones within the set of tones equals to the puncture number;

tuning, per tone within the set of tones, the tone;

transforming, per peak index within the set of peak indices, the tuned set of tones into time domain to obtain a peak-reduced sample corresponding to the peak index; and

replacing, per peak index within the set of peak indices, a sample corresponding to the peak index with the peak-reduced sample corresponding to the peak index.

14. A computer program according to claim 13, further comprising instructions for causing the apparatus to further perform the following after performing the tone puncturing procedure:

determining whether at least one sample within the plurality of samples meets the amplitude threshold; and

repeating, in response to the at least one sample meeting the amplitude threshold, performing the tone puncturing procedure.

FIG. 1

FIG. 2

Determine set of peak indices — 301

Determine puncture number — 302

Select set of tones — 303

Tune set of tones — 304

Transform to obtain peak-reduced sample — 305

Replace sample with peak-reduced sample — 306

FIG. 3

Obtain frequency domain signal — 401

Generate time domain signal — 402

At least 1 sample meets amplitude threshold? — 403

yes

no

Perform tone puncturing — 404

Generate ODFM signal — 405

FIG. 4

FIG. 5

FIG. 6

FIG. 7

FIG. 8

**EUROPEAN SEARCH REPORT**

Application Number

EP 25 15 2049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAROLE A DEVLIN ET AL: "Gaussian Pulse Based Tone Reservation for Reducing PAPR of OFDM Signals", I E E E V T S VEHICULAR TECHNOLOGY CONFERENCE. PROCEEDINGS, IEEE, US, 1 April 2007 (2007-04-01), pages 3096-3100, XP031086456, ISBN: 978-1-4244-0266-3 * Sections II., III. and IV. * | 1-14 | INV. H04L27/26 |
| A | JP 2010 171738 A (KDDI CORP) 5 August 2010 (2010-08-05) * paragraph [0002] - paragraph [0013]; figure 1 * | 1-14 | |
| A | CAGDAS TUNA ET AL: "Tone injection with aggressive clipping projection for OFDM PAPR reduction", ACOUSTICS SPEECH AND SIGNAL PROCESSING (ICASSP), 2010 IEEE INTERNATIONAL CONFERENCE ON, IEEE, PISCATAWAY, NJ, USA, 14 March 2010 (2010-03-14), pages 3278-3281, XP031697948, ISBN: 978-1-4244-4295-9 * Sections 2. and 3. * | 1-14 | |
| A | YUNMOK SON ET AL: "An Approach for PAPR Reduction Based on Tone Reservation Method", CONSUMER COMMUNICATIONS AND NETWORKING CONFERENCE, 2009. CCNC 2009. 6TH IEEE, IEEE, PISCATAWAY, NJ, USA, 10 January 2009 (2009-01-10), pages 1-2, XP031425495, ISBN: 978-1-4244-2308-8 * Sections II. and III. * | 1-14 | |

**TECHNICAL FIELDS SEARCHED (IPC)**

H04L

The present search report has been drawn up for all claims

| Place of search | Date of completion of the search | Examiner |
|---|---|---|
| Berlin | 26 May 2025 | Chave, Julien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT**

**ON EUROPEAN PATENT APPLICATION NO.**                    EP 25 15 2049

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2025

| Patent document cited in search report | Publication date | Patent family member(s) | Publication date |
|---|---|---|---|
| JP 2010171738    A | 05-08-2010 | NONE | |

EPO FORM P0459